# EUROPEAN PATENT APPLICATION

(11) **EP 3 677 801 A1**
(43) Date of publication of application: **08.07.2020**
(21) Application number: 19461502.7
(22) Date of filing: 07.01.2019
(51) Int. Cl.: F16C 3/02, F16C 7/02, F16F 15/32

(54) **TRANSMISSION SHAFT**

(71) Applicant: Hamilton Sundstrand Corporation, Charlotte, NC 28217-4578 (US)
(72) Inventor: Kielbowicz, Dariusz, 59-700 Boleslawiec (PL); CIS, Marcin, Lutynia (PL)
(74) Representative: Dehns

(57) **Abstract**

A transmission shaft comprising: an input side 20 for inputting torque; an output side 30 for outputting torque; a rod 10 extending in a longitudinal direction between the input side and the output side to transfer torque along the transmission shaft 100, the rod comprising a first end 10b provided at the input side, a second end 10c provided at the output side and a torsional compliant section 10a extending therebetween providing the transmission shaft with a torsional stiffness. A casing 40 extends around the torsional compliant section and is arranged to resist deflection of the rod without increasing the torsional stiffness of the transmission shaft.

## Description

### Field

The present disclosure relates to a transmission shaft, for example, for a power transmission shaft assembly, and to a method of manufacturing such a transmission shaft.

### Background

In some power transmission systems there is a need for torsional compliance in a transmission shaft. The term "transmission shaft" used herein refers to any form of shaft which is used to transfer torque between two components, for example, a driveshaft, actuator shaft, or other output shaft delivering rotational movement. Torsional compliant shafts can act as springs, protecting the rest of the transmission system from sudden spikes of torque originating from jams or sudden changes of load.

Currently, the torsional compliance is usually obtained by replacing a torsionally stiff section of a transmission shaft, typically in the form of a tube, with a solid rod of narrower section. The solid rod is less rigid in torsion than the tube section of the transmission shaft and provides the power transmission system with a degree of torsional compliance.

The problem with such a solution is that a solid rod design also does not have as much stiffness in a transverse direction as a tubular shaft. As a result it can be susceptible to harmonic vibration, particularly when there is a sudden spike of torque, for example when a part fails or jams, resulting in large deflections away from a neutral position. While such sudden spikes of torque tend to be "one-off events, they can cause catastrophic failure in the transmission shaft or rupture a neighbouring component if the amplitude of oscillation is not reduced in some way.

In normal use, when the transmission shaft is transferring torque between an input side and an output side of the transmission shaft, any oscillations in the rod would be generally within predetermined limits, though it is also possible for resonance to set in at certain harmonic frequencies. Large oscillation amplitudes, for example, during "one-off" events, can induce large stresses in the transmission shaft which can lead to component failure.

On aircraft there are different design stipulations for how much transverse (lateral) deflection can be allowed in a transmission shaft during normal use as well as during such "one-off' events when spikes of torque may be experienced. These amounts may depend on where the transmission shaft is positioned on the aircraft, for example, whether it is within the fuselage, in which case stricter requirements may apply.

It has been found that the existing solution, while it can provide the necessary torsional compliance to a power transmission system, is not able to satisfy some of the stricter requirements in terms of deflection experienced when subjected to a spike of torque. There is therefore a desire to reduce amplitude of oscillation in a transmission shaft that comprises a rod with a torsional compliant section. There may also be benefits in reducing the amplitude of oscillation in such a transmission shaft at other times.

### Summary

Viewed from a first aspect the present disclosure provides a transmission shaft comprising: an input side for inputting torque, an output side for outputting torque, and a rod extending in a longitudinal direction between the input side and the output side to transfer torque along the transmission shaft, the rod comprising a first end provided at the input side, a second end provided at the output side and a torsional compliant section extending therebetween. The torsional compliant section provides the transmission shaft with a torsional stiffness. The transmission shaft further comprises a casing extending around the torsional compliant section. The casing is arranged to resist deflection of the rod without increasing the torsional stiffness of the transmission shaft.

The casing may be fixed relative to the rod at a single fixing point and a remainder of the casing may be free to move longitudinally and rotate relative to the rod.

The casing may be fixed relative to the first end of the rod or the second end of the rod. Optionally it is fixed relative to the first end.

The transmission shaft may comprise a connector mount fitted to the first (and/or second) end of the rod. The casing may be fixed to a surface of such a connector mount fitted on the first end or the second end, respectively, of the rod. By contrast. the casing may overlap and be free to slide about the other of the first or second end of the rod.

Alternatively, the casing may be fixed to the torsional compliant section of the rod. The casing, for example, may be fixed to a middle region of the torsional compliant section and both ends of the casing may overlap with and be free to slide about the first and second ends of the rod, respectively, or a surface of a connector mount provided at the first and/or second end.

The casing may be arranged to functionally engage with the rod when deflection of the rod exceeds a predetermined amount. The functional engagement may comprise transverse load being transferred to the casing, the transverse load being resisted by transverse stiffness of the casing. The functional engagement may act to reduce oscillation amplitude in the torsional compliant section of the rod. The casing may be arranged to functionally engage with the rod through direct engagement of the casing with the rod or via an intermediary part.

The first end and the second end of the rod may be wider than the torsional compliant section. The first end, the second end and the torsional compliant section of the rod may be circular cross section and the width corresponds to a diameter of the rod at that end or section.

The first end and the second end of the rod may be mounted in connector mounts of torque plates. The first and second ends may be fixed to the connector mounts with fasteners. Additionally or alternatively, an adhesive may be used to fix the first and second ends to the respective connector mounts. The torque plates may be connected to torque plates of a flexible coupling. In other arrangements the connector mounts may extend into a flexible coupling without a torque plate being present. The flexible coupling may comprise a universal joint and a splined input/output shaft.

The transmission shaft may comprise an assembly of a transmission shaft as described in any of the statements above with a flexible coupling mounted to each of the first and second ends of the rod. The two flexible couplings may the same.

An inner surface of the casing may be spaced radially outwardly from an outer surface of the torsional compliant section of the rod. The radial spacing may correspond to a difference in the widths of the rod at the first/second end and the torsional compliant section, optionally including a sleeve thickness of the connector mount where appropriate.

The torsional compliant section may extend for a length L_{tcs} between the first end and the second end of the rod, and the casing may extend longitudinally, around the torsional compliant section, for a longitudinal distance of more than 50% of L_{tcs}. The casing may extend longitudinally for a longitudinal distance more than 75% of L_{tcs}. The casing may have a length of more than L_{tcs} and extend over the entire length of the torsional compliant section. The casing may have a length which additionally includes a portion of the first and/or second end of the rod.

The casing may have a transverse stiffness that is able to double an overall transverse stiffness of the transmission shaft when it is engaged by the rod during oscillations. The oscillations may have to be of predetermined amplitude or greater before the rod engages the casing.

The casing may comprise a sleeve, optionally a cylindrical sleeve of generally uniform internal diameter. The sleeve may comprise two sleeve sections which connect in a central region of the transmission shaft. The two sleeve sections may overlap in this central region where they connect.

The casing may comprise a support which is located on the sleeve at a position corresponding to a central region of the transmission shaft. The support may comprise multiple segments. The support may be spaced from the surface of the rod when the rod is in a neutral position. The support may be retained in a groove of the sleeve.

Viewed from a second aspect the present disclosure provides a method of making a transmission shaft, the transmission shaft comprising an input side for inputting torque, an output side for outputting torque, and a rod extending in a longitudinal direction between the input side and the output side to transfer torque along the transmission shaft, the rod comprising a first end provided at the input side, a second end provided at the output side and a torsional compliant section extending therebetween. The torsional compliant section provides the transmission shaft with a torsional stiffness. The method comprises fitting a casing around the torsional compliant section such that it is arranged to resist deflection of the rod without increasing the torsional stiffness of the transmission shaft.

The method may comprise fitting the casing around the torsional compliant section and fixing the casing relative to the rod at one end of the casing. A remainder of the casing may be left to move relative to the rod during use.

The method may comprise fitting a casing around the torsional compliant section as two sleeve sections which are connected together in a central region of the transmission shaft during the fitting.

### Brief Description of the Figures

Certain embodiments of the disclosure will now be described below by way of example only and with reference to the accompanying drawings, in which:
Figure 1a shows a perspective view of a known transmission shaft with a torsional compliant section in a neutral position;
Figure 1b shows the transmission shaft of Figure 1a under deflection;
Figure 2a shows a perspective cross-sectional view of an embodiment of a transmission shaft in accordance with the present disclosure comprising a rod located within a casing;
Figure 2b shows in cross-section schematic enlargements of portions A, B and C highlighted in Figure 2a;
Figure 3a shows a perspective view of the transmission shaft of Figure 2a in the neutral position;
Figure 3b shows the transmission shaft of Figure 2a under deflection; and
Figure 4 shows a schematic representation of a power transmission system.

### Detailed Description

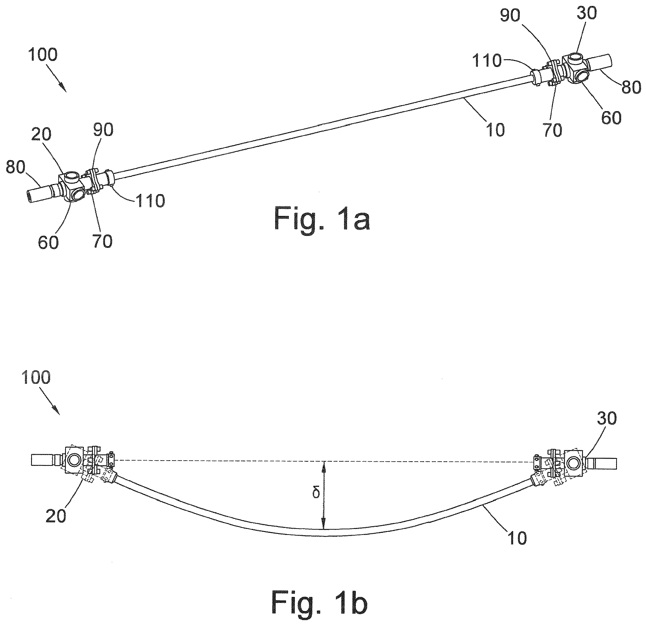

Figure 1a and 1b show an example of a transmission shaft 100 with a rod 10 extending between input side 20 and an output side 30 of the transmission shaft 100. In this example, the input side 20 is for inputting torque to the transmission shaft 100 and the output side 30 is outputting torque from the transmission shaft 100.

The input side 20 and the output side 30 may comprise flexible couplings 70, for example, comprising a universal joint 60 or other form of torque connector, that are connected to a first end 10b and a second end 10c of the rod 10. The transmission shaft 100 may be coupled with two such flexible couplings to provide a power transmission shaft assembly for a drive train.

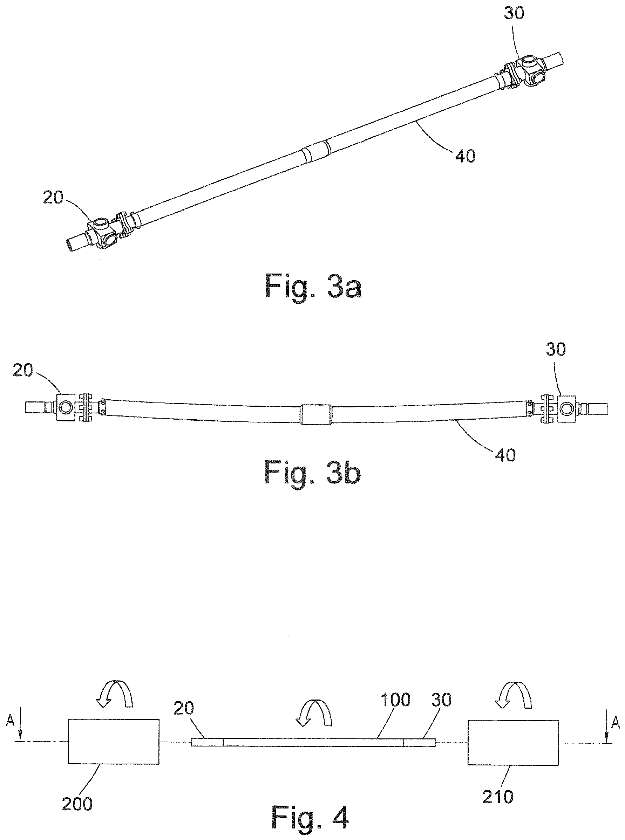

The flexible couplings 70 may comprise a splined fitting 80 on one side of the universal joint 60, and a torque plate 90 and connector mount 110 on the other (rod) side of the universal joint 60, for example as shown. The flexible couplings can be used to connect the input side 20 and the output side 30 of the transmission shaft 100, respectively, to other components in the drive train or transmission system. As shown in Figure 4, splined fitting 80 at the input side 20 can receive torque from a component 200 upstream of the splined fitting 80 such as a motor, gearbox or power transmission shaft and couple that torque through the universal joint 60 and the torque plate 90 and connector mount 110 into the first end 10b of the rod 10.

Similarly, at the output side 30, a second torque connector 70 comprising a torque plate 90, a universal joint 60 and a splined fitting 80, can receive torque from the second end 10b of the rod 10 and output the torque to a component 210 downstream of the transmission shaft 100, for example, an actuator, a gearbox, generator, or other component requiring a rotational drive.

The rod 10 extends longitudinally from the first end 10b to the second end 10c for transferring the torque between the input side 20 and the output side 30 of the transmission shaft 100. The rod 10 additionally comprises a torsional compliant section 10a, for example, arranged as a section of the rod 10 of reduced diameter extending between the first end 10b and the second end 10c. The torsional compliant section 10a may extend the full length between the wider diameter first end 10b and the second end 10c.

The torsional compliant section 10a is provided to allow the transmission shaft 100 to respond to and to take up sudden spikes in torque. The rod 10 is compliant in a torsional direction to allow the shaft to twist and act as a spring to protect the other components of the transmission system. For such torsionally compliant transmission shafts, the rod 10 is typically a solid rod and the torsional compliant section 10a is an extended section between the ends that is of reduced diameter, providing a spring-like torsional resilience to the transmission system.

Figure 1a shows the transmission shaft 100 in a neutral position. By the term "neutral position" used herein, it is meant the position that the transmission shaft 100 naturally adopts at rest as well as positions during normal use where the differences in torque between the first and second ends 10b, 10c are relatively small compared to a full working range of allowable deflection, e.g., when small oscillations within the rod 10 may be present. Thus, "neutral position" includes the condition where there is a minor amount of deflection along the rod 10 in accordance with normal operational tolerances at the lower end of the working range.

By contrast, Figure 1b shows the transmission shaft 100 in use when significant oscillations are experienced having an excessive amplitude, i.e., towards the upper end of a working range. Such oscillations may be experienced during use when harmonic resonance is encountered, but more particularly can be witnessed when a spike of torque is induced in the transmission system, for example, as a result of a component failing or jamming.

Part of the trade-off of providing a transmission shaft 100 with a torsional compliant section 10a is that the torsional compliant section 10a is naturally more flexible and so will lack the lateral stiffness of a regular transmission shaft 100, for example, which may comprise a tubular section of wider diameter having much greater lateral stiffness. As a result, the torsional compliant section 10a is more susceptible to harmonic vibration.

It has been found during testing that this existing design of compliant transmission shaft 100 can fail under the High Level Short Duration (HLSD) curve P (+/- 10G n-pk) of the DO160G requirements. DO160G outlines a set of minimum requirements and specifies testing procedures for airborne equipment. The existing design can be seen to undergo severe deflection, which in turn can lead to large internal stresses. For example, a transmission shaft 100 of approximately 1-2m length might undergo up to 15cm of deflection under the 10G conditions.

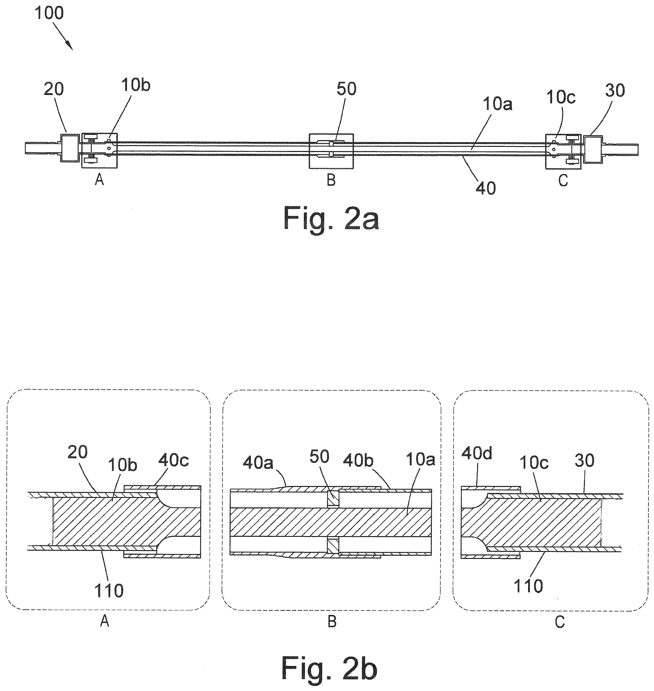

The proposed solution to this problem is shown in Figures 2a and 2b. Figure 2a shows the transmission shaft 100 with a casing 40 extending along the length of the rod 10, between the first end 10b at the input side 20 and the second end 10c at the output side 30. In this illustrative embodiment, the casing 40 extends around the circumference of the rod 10 and substantially all the way along the rod 10. The casing 40 is arranged concentrically with the rod 10 about the axis A-A of the rod 10.

In order to allow the rod 10 to maintain torsional compliance, the casing 40 may only be fixed to the rod at one point. The other points along the casing 40 can be free to rotate relative to the rod 10. This allows the rod 10 to retain the torsional compliance during spikes in torque, without also twisting the casing 40.

In this embodiment the casing 40 is cylindrical, with a substantially constant internal diameter and no apertures in the circumferential surface; however, it will be appreciated that other more irregular shapes can be used as the casing 40, for example, polygonal cross-sections or ovalised cross-section could be used as well as cross-sections which vary in dimension and/or shape in the axial direction, and also that one or more apertures may be included in the casing 40, for example, to reduce circumferentially rotating mass.

The main requirement is that the casing 40 should increase the overall lateral stiffness of the transmission shaft 100 without affecting its torsional compliance. As the casing 40 will be rotating with the rod 10, it should be of a material and configuration that will not impact the rotational operation and efficiency of the transmission shaft too significantly.

The rod 10 comprises a torsional compliant section 10a arranged between a first end 10b and a second end 10c. As shown in Figure 2a, the torsional compliant section 10a may have a smaller cross section/reduced diameter compared to the first end 10b and/or the second end 10c. The first end 10b and the second end 10c may have equal cross sections/same diameters as shown. Providing the rod 10 with larger cross sections/larger diameters at the first and second ends 10b, 10c helps to transfer torque between the respective ends 10b, 10c and the torque connectors 70, as well as to define the working extent of the torsional compliant section 10a.

In the figures, the rod 10 is shown with a circular cross-section. In some embodiments a polygonal or other cross-section could be used instead.

The casing 40 provides the rod 10 with additional transverse (lateral) stiffness. The rod 10 functionally engages with the casing 40 as it deflects beyond its neutral position. This functional engagement is in the sense of restricting the amount of deflection for a given spike of torque or harmonic oscillation. There may be a clearance between the rod 10 and the casing 40 so that the rod 10 may engage directly with part of the casing 40, transferring load into the casing 40 once it has deflected beyond a predetermined point. Alternatively load may be transferred as soon as deflection in the rod 10 commences if desired, though it reduces wear during normal use if an initial clearance is provided between the parts. In other words the additional lateral stiffness provided by the casing 40 may only start to be felt by the rod 10 once oscillations have exceeded a predetermined amplitude.

The gaps between the respective parts shown in Fig. 2b are shown schematically by way of illustration and are not to scale.

The casing 40 may increase lateral stiffness of the transmission shaft 100 by more than 10%, 25%, 50%, 75%, 90%, or even more than 100%.

The casing 40 may be made from a material with a higher lateral stiffness than the rod 10. For example, it may be made from a stronger aluminium alloy, steel, superalloy material, etc., than the rod 10. Alternatively, it may be made of the same material as the rod 10, ensuring compatibility with the rod 10. The casing 40 may additionally or alternatively comprise features which stiffen the casing 40, particularly in a lateral direction, for example, ribs or other features which resist lateral deflection.

Through the addition of the casing 40, the amount of deflection in the transmission shaft 100 during oscillations is reduced significantly. It may reduce the oscillation amplitude by 50% or more, for example, by more than 75%. In some embodiments the oscillation amplitude of the transmission shaft is reduced by up to 90% compared to a transmission shaft 100 without a casing 40.

In applications this may equate to reducing oscillation amplitude to below 50mm on a 1.5m transmission shaft 100. Indeed oscillation amplitudes may be reduced below 30mm, or even less than 25mm on such a transmission shaft 100 subjected to a HLSD curve P (+/-10G n-pk) of the DO160G test.

The casing 40 is arranged so as not to increase (at least not significantly) the torsional stiffness of the transmission shaft 100. It is arranged so that a primary load path for the torque being transferred between the input end 20 and the output end 30 is along the torsional compliant section of the rod 10a. As a result the torsional compliant section 10a provides the torsional stiffness of the transmission shaft 100. During significant deflections, a small amount of incidental torque (less than 5% and more likely less than 1%) may be carried through the casing through friction with the rod 10, but there is no intention to use the casing 40 as a secondary load path for the torque. One end may be secured to the rod 10 while the other end may be free to move with respect to the rod 10, or the casing 40 may be secured to the rod 10 in a more central region and both ends may be free to move with respect to the rod 10.

The casing 40 is connected to the rod 10, either directly or, as shown in the illustrated embodiment, via a connector mount 110 fitted to the first end 10b (or second end 10c) of the rod 10. The connection may be at one point or one region along the casing's length. The connection is in the sense of being fixed relative to the rod 10 such that the casing 40 rotates with the rod 10. The casing 40 may be able to move freely along the rod 10 and rotate freely with respect to the rod 10 at all other points. This allows the casing 40 to provide the necessary lateral stiffness without increasing the torsional stiffness of the rod 10.

Figure 2b shows parts of the transmission shaft of Figure 2a in more detail. In particular it shows enlargements of three sections of the shaft; section A is an enlargement of the first end 10b, section B is an enlargement of a central region of the torsional compliant section 10a and section C shows an enlargement of the second end 10c.

In the exemplary embodiment, the casing 40 is rigidly attached at a casing first end 40c to a connector mount 110 of a torque plate 90 fitted to the first end 10b of the rod 10 at the input side 20, but it could also be attached to the rod 10 directly if desired.

The casing 40 is fixed to the input side 20 in a way that minimises possible disruption to the intended operation of the rod 10, and so the material properties of the rod 10 are, as far as possible, unaffected. For example, the casing may be fixed to the connector mount 110 with an adhesive or other form of bonding, possibly through a metal fusion technique such as welding. Additional fasteners are avoided where possible, since these are likely to have an effect on operational performance of the rod 10.

As shown in section C of Figure 2b, at the second end 10b of the rod 10, and at other portions of the rod 10, the casing 40 is free to move relative to the rod 10, for example, to slide over an outer surface of a connector mount 110 of a torque plate 90 fitted to the second end 10b of the rod 10. In other arrangements, the casing second end 40d may be arranged to slide directly over a surface of the rod 10. The casing 40 may bear against the surface of the connector mount 110, or the second end 10b of the rod 10, during lateral deflection of the rod 10, depending on the configuration.

Where heads of fasteners are present on the surface of the connector mount 110, the casing 40 may include apertures to ensure a clearance and to avoid contact with the fasteners. The apertures may be in the form of slots extending parallel with the axis A-A.

The casing 40 may include one or more supports 50 arranged to engage the outer surface of the rod when oscillation amplitude has exceeded a predetermined amount, for example, more than 1 or 2 mm, through providing a clearance of this amount. The clearance may be less than 5mm and more usually less than 3mm. The one or more supports may be provided at or towards the middle of the casing 40. The one or more supports may be ring-shaped.

To aid assembly, the casing 40 may comprise two cylindrical sleeves sections 40a and 40b and a support 50. The two cylindrical sections 40a, 40b of the casing 40 overlap at a central region of the transmission shaft 100 where they are connected together. This can be seen in section B of Figure 2b. The casing may retain the support 50 in this central region. The support 50 may be free to move relative to the surface of the rod 10. Indeed, the support 50 may include a clearance between an inner surface of the support 50 and an outer surface of the rod 10 so that contact is made only when oscillations or other deflections exceed a predetermined amplitude.

The support 50 may comprise multiple segments positioned around the surface of the rod 10 and connected to one of the sleeve sections 40a, 40b. In the embodiment, the support 50 is the form of a split ring. This enables the casing 40 to be mounted to the rod 10 after the rod 10 has been manufactured, in a way that accounts for the torsion compliant section 10a being of reduced diameter.

In other arrangements, for example, where the rod is of uniform diameter, little or no spacing may be provided between the casing 40 and the rod 10, avoiding the need for the casing 40 to include a support 50. Alternatively the casing 40 may comprise internal ribs of other features to transmit transverse load from the rod 10 into the casing 40.

By providing the casing 40 with one fixed end 40c and one movable end 40d, all of the movement (backlash) can be accommodated at one end. The movement may be caused through deflection of the rod 10 during oscillations causing longitudinal and rotational displacement, as well as through different thermal expansion rates causing changes in length through temperature variations.

In an alternative embodiment, the casing 40 is connected to the rod 10 in a central region of the rod 10, and both ends 40c, 40d of the casing 40 are free to move with respect to the rod 10.

The transmission shaft will typically be used on aircraft power drive units (PDU). These systems have relatively low rotational velocities, for example, less than 1000 rpm or even less than 500 rpm. In many instances they are approximately 100rpm.

It has been found that the casing 40 can reduce the amount of deflection in the transmission shaft by more than 50%. Indeed in many cases it can reduce the amount of deflection by over 75%.

In one example, a transmission shaft of around 1.5m in length, through the addition of the casing 40, was able to reduce oscillation amplitude from a value of over 150 mm to less than 25mm. This also resulted in a significant reduction of stress in the torsional compliant section 10a from beyond 1600 MPa to below 700 MPa. As a result the transmission shaft with the casing 40 no longer fails at DO160G harmonic curve excitation.

Thus compliant transmission of torque in a drive train is possible through the use of the casing 40. Compliant transmission can be provided even in high-shock high-vibration environments previously only possible in less demanding zones of an aircraft. In addition the torsional compliance of the internal shaft can be maintained. A peak resonance stress in the transmission shaft may be reduced by up to 60% compared to a transmission shaft without a casing.

Figure 3a and 3b show the exemplary transmission shaft of the present disclosure undergoing transverse bending. As shown best in Figure 3b the deflection in the transmission shaft 100 is significantly reduced compared to the transmission shaft shown in Figure 1a and 1b without the stiff external casing 40.

Viewed from another aspect the present disclosure can also be seen to provide a method of reducing amplitude of oscillations in a torsional compliant section of a rod of a transmission shaft, for example, a transmission shaft for an aircraft, in particular within a fuselage of an aircraft, wherein the transmission shaft comprises an input side for inputting torque, an output side for outputting torque, and a rod extending in a longitudinal direction between the input side and the output side to transfer torque along the transmission shaft, the rod comprising a first end at the input side, a second end at the output side and the torsional compliant section extending therebetween, the method comprises: providing the transmission shaft with additional lateral stiffness by fitting a casing around the torsional compliant section, the casing restricting deflection of the torsional compliant section. The casing is fitted so as not to increase torsional stiffness of the transmission shaft during normal torque transfer.

## Claims

1. A transmission shaft comprising:
an input side for inputting torque;
an output side for outputting torque;
a rod extending in a longitudinal direction between the input side and the output side to transfer torque along the transmission shaft, the rod comprising a first end provided at the input side, a second end provided at the output side and a torsional compliant section extending therebetween providing the transmission shaft with a torsional stiffness; and
a casing extending around the torsional compliant section that is arranged to resist deflection of the rod without increasing the torsional stiffness of the transmission shaft.

2. A transmission shaft as claimed in claim 1, wherein the casing is fixed relative to the rod at a single fixing point and a remainder of the casing is free to move longitudinally and rotate relative to the rod.

3. A transmission shaft as claimed in claim 2, wherein the casing is fixed relative to the first end of the rod or the second end of the rod, optionally fixed to a surface of a connector mount fitted on the first end or the second end, respectively, of the rod.

4. A transmission shaft as claimed in claim 2, wherein the casing is fixed to the torsional compliant section of the rod.

5. A transmission shaft as claimed in any preceding claim, wherein the casing is arranged to functionally engage with the rod when deflection of the rod exceeds a predetermined amount, optionally through direct engagement of the casing with the rod.

6. A transmission shaft as claimed in any preceding claim, wherein the first end and the second end of the rod are wider than the torsional compliant section, and optionally wherein, the first end and the second end of the rod are mounted in connector mounts of torque plates.

7. A transmission shaft as claimed in any preceding claim, wherein an inner surface of the casing is spaced radially outwardly from an outer surface of the torsional compliant section of the rod.

8. A transmission shaft as claimed in any preceding claim, wherein the torsional compliant section extends for a length L_{tcs} between the first end and the second end of the rod, and the casing extends longitudinally, around the torsional compliant section, for a longitudinal distance of more than 50% of L_{tcs}, optionally more than 75% of L_{tcs}, and further optionally the casing has a length of more than L_{tcs} and extends over the entire length of the torsional compliant section.

9. A transmission shaft as claimed in any preceding claim, wherein the casing has a transverse stiffness that is able to double an overall transverse stiffness of the transmission shaft when it is engaged by the rod during oscillations.

10. A transmission shaft as claimed in any preceding claim, wherein the casing comprises a sleeve, optionally a cylindrical sleeve of generally uniform internal diameter.

11. A transmission shaft as claimed in claim 10, wherein the sleeve comprises two sleeve sections which connect in a central region of the transmission shaft.

12. A transmission shaft as claimed in claim 10 or 11, wherein the casing comprises a support which is located on the sleeve at a position corresponding to a central region of the transmission shaft, optionally wherein the support comprises multiple segments.

13. A transmission shaft as claimed in claim 12, wherein the support is spaced from the surface of the rod when the rod is in a neutral position, and optionally wherein the support is retained in a groove of the sleeve.

14. A method of making a transmission shaft, the transmission shaft comprising an input side for inputting torque, an output side for outputting torque, a rod extending in a longitudinal direction between the input side and the output side to transfer torque along the transmission shaft, the rod comprising a first end provided at the input side, a second end provided at the output side and a torsional compliant section extending therebetween providing the transmission shaft with a torsional stiffness,
wherein the method comprises fitting a casing around the torsional compliant section such that it is arranged to resist deflection of the rod without increasing the torsional stiffness of the transmission shaft.

15. A method as claimed in claim 14, wherein the method comprises fixing the casing relative to the rod at one end of the casing, leaving a remainder of the casing to move relative to the rod during use, and optionally wherein the method comprises fitting a casing around the torsional compliant section as two sleeve sections which are connected together in a central region of the transmission shaft during the fitting.
